# EUROPEAN PATENT APPLICATION

(11) **EP 4 629 428 A1**
(43) Date of publication of application: **08.10.2025**
(21) Application number: 23933344.6
(22) Date of filing: 17.04.2023
(51) Int. Cl.: H01M 50/489, H01M 50/411

(54) **ISOLATION FILM, BATTERY CELL, BATTERY, AND ELECTRIC APPARATUS**

(71) Applicant: Contemporary Amperex Technology Co., Limited, Ningde, Fujian 352100 (CN)
(72) Inventor: LI, Baiqing, Ningde, Fujian 352100 (CN); PENG, Shuangjuan, Ningde, Fujian 352100 (CN); PENG, Lin, Ningde, Fujian 352100 (CN); JIN, Haizu, Ningde, Fujian 352100 (CN); ZHAO, Fenggang, Ningde, Fujian 352100 (CN)
(74) Representative: Kraus & Lederer PartGmbB
(86) International application number: PCT/CN2023/088791
(87) International publication number: WO 2024/216464

(57) **Abstract**

The present application provides a separator, a battery cell, a battery and an electrical apparatus. The separator includes a separator body and a polymer layer arranged on at least one surface of the separator body. The polymer layer includes an ether polymer. The ether polymer is made into a sheet-like structural body; the sheet-like structural body is subjected to a dynamic frequency scanning test at (Tₘ+20)°C to obtain an elastic modulus G' - loss modulus G" curve, and the elastic modulus G' - loss modulus G" curve has a slope of K, where 1<K<∞, and Tm°C represents the melting temperature of the ether polymer.

## Description

### TECHNICAL FIELD

The present application relates to the technical field of batteries, and in particular to a separator, a battery cell, a battery and an electrical apparatus.

### BACKGROUND

Battery cells are widely used in electronic devices, such as mobile phones, laptop computers, battery motorcycles, electric vehicles, electric airplanes, electric ships, electric toy cars, electric toy ships, electric toy airplanes, and electric tools due to their characteristics of high capacity and long life.

As the battery application range broadens, requirements for performances of battery cells are strict progressively. However, the existing battery cells have poor storage performance which still needs to be further improved.

### SUMMARY OF THE INVENTION

Embodiments of the present application are conducted in view of the above problems, and aim to provide a separator, a battery cell, a battery and an electrical apparatus.

In a first aspect of the present application, provided is a separator. The separator includes a separator body and a polymer layer arranged on at least one surface of the separator body, the polymer layer including an ether polymer, where the ether polymer is made into a sheet-like structural body; the sheet-like structural body is subjected to a dynamic frequency scanning test at (Tₘ+20)°C to obtain an elastic modulus G' - loss modulus G'' curve, and the elastic modulus G' - loss modulus G" curve has a slope of K, where 1<K<∞, and Tₘ°C represents the melting temperature of the ether polymer.

Therefore, when the polymer in the embodiments of the present application meets the above range, the molecular chain entanglement state can be reduced, which is conducive to diffusion of an electrolyte solution between molecular chains. Moreover, the polymer still maintains a certain molecular chain entanglement state, which is capable of locking the electrolyte solution inside the polymer, and is capable of reducing the risk of the polymer dissolving in the electrolyte solution and improving performance stability of the polymer. The polymer and the electrolyte solution can form a three-dimensional connected interface between the separator and an electrode plate, and the interface has a mesh structure, which is conducive to increasing the rate of diffusion of active ions, such as lithium ions, from the electrolyte solution to the electrode plate, increasing conductivity of the separator, reducing concentration polarization, and allowing the active ions to be quickly intercalated in the electrode plate and uniformly deposited, thereby improving the storage performance of the battery cell.

In some embodiments, 1<K≤100; and optionally, 1≤K≤10.

In some embodiments, the ether polymer has a glass transition temperature of Tg in the unit of °C, where -100≤Tg≤50; and optionally, -80≤Tg≤30. The glass transition temperature of the polymer is relatively low, the molecular chain segments are more flexible, and adjacent molecular chains are easier to open.

In some embodiments, the ether polymer includes a building block represented by Formula (I), 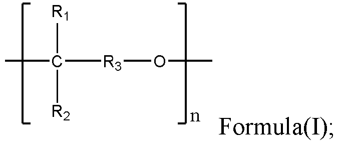 in Formula (I), R₁ and R₂ each independently include a hydrogen atom, a substituted or unsubstituted C1-C3 alkyl group or a substituted or unsubstituted C1-C3 alkoxy group; and R₃ includes a substituted or unsubstituted C1-C5 methylene group; optionally, R₁ and R₂ each independently include a hydrogen atom, a substituted or unsubstituted C1-C2 alkyl group; and/or R₃ includes a single bond and a substituted or unsubstituted C1-C4 methylene group.

In some embodiments, the ether polymer includes at least one of a building block represented by Formula (I-1) to a building block represented by Formula (I-8),

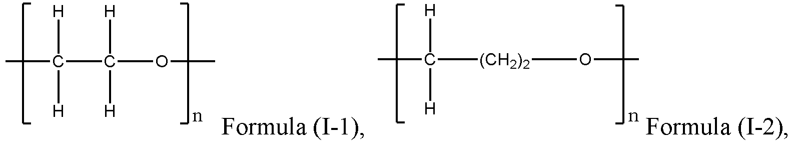

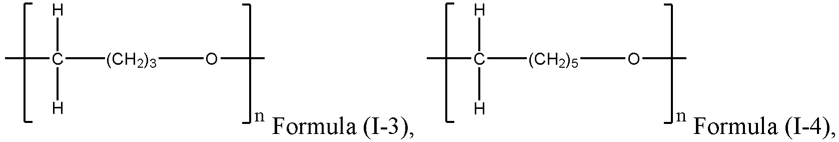

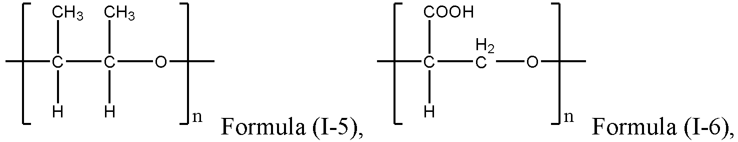

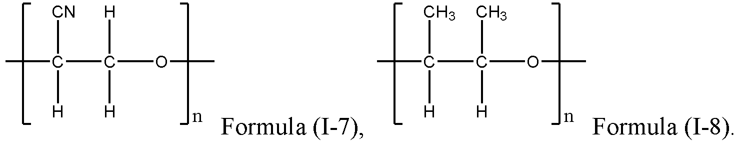

In some embodiments, the ether polymer includes a building block represented by Formula (II), 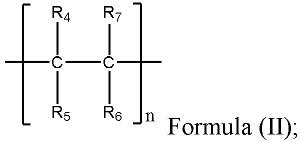 in Formula (II), R₄ to R₇ each independently include a hydrogen atom, a substituted or unsubstituted C1-C3 alkyl group, a substituted or unsubstituted C1-C3 alkoxy group or ether group, and at least one of R₄ to R₇ includes a substituted or unsubstituted C1-C3 alkoxy group or ether group; optionally, R₄ to R₇ each independently include a hydrogen atom, a substituted or unsubstituted C1-C2 alkyl group, a substituted or unsubstituted C1-C2 alkoxy group or ether group, and at least one of R₄ to R₇ includes a substituted or unsubstituted C1-C2 alkoxy group or ether group.

In some embodiments, the ether polymer includes at least one of a building block represented by Formula (II-1) to a building block represented by Formula (II-7),

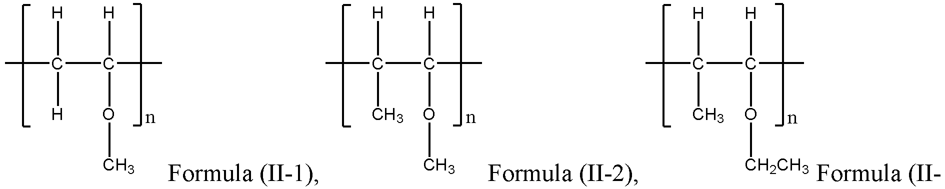

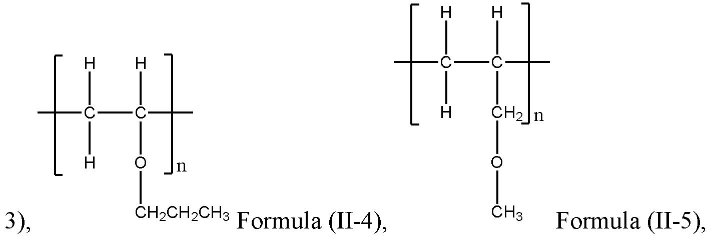

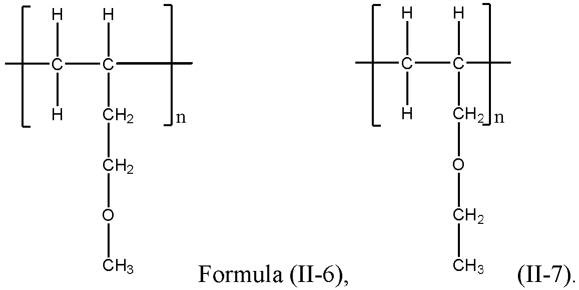

In some embodiments, n is selected from positive integers of 1500 to 25000; and/or the ether polymer has a molecular weight ranging from 1.2x10⁵g/mol to 1.0x10⁶g/mol. When the molecular weight of the ether polymer is within the above range, the molecular chains of the ether polymer can be stretched in the electrolyte solution, but are not easily completely dissolved and dispersed by the electrolyte solution, which is beneficial to regulating the uniform distribution and dispersion of the molecular chains of the ether polymer in the electrolyte; and can further improve the flexibility between the molecular chains of the ether polymer, and the interaction force between the molecular chains is relatively weak, which is beneficial for the solvent molecules in the electrolyte solution to open the molecular chains, enter between the molecular chains, and be wrapped by the molecular chains, thereby facilitating the active ions entering the active material through the solvent, thereby realizing the smooth and rapid migration of the active ions.

In some embodiments, the ether polymer is added to a first solvent at 70°C to form an ether polymer system; the ether polymer system is subjected to standing at 70°C for 8h, and after standing at 25°C for the time of ≥24h, the ether polymer system is filtered via a 200-mesh filter screen, with a first substance remained, where the polymer has a mass of q in the unit of g; the first substance has a mass of m in the unit of g; and the polymer and the first substance satisfy: 5≤m/q≤1000.

In this way, the embodiments of the present application can realize the stretching of the polymer molecular chains by increasing the temperature within a safety working temperature range of the battery cell, thereby promoting the mutual attraction and physical bonding of the polymer molecular chains and the electrolyte solution. At room temperature, the activity of the ether polymer molecular chain segments is reduced, and they remain attached to the surface of the isolation body and lock the electrolyte solution in the spatial environment where the polymer is located, forming a gel or a gel-like state, which can increase the transmission rate of active ions such as lithium ions and improve the cycling performance and storage performance.

In some embodiments, the separator body includes a substrate, and the polymer layer is arranged on at least one surface of the substrate.

In some embodiments, the separator body includes a substrate and a heat-resistant coating, the heat-resistant coating is arranged on at least one surface of the substrate, and the polymer layer is arranged on a surface of the heat-resistant coating facing away from the substrate.

In some embodiments, the polymer layer further includes heat-resistant particles. The synergistic effect of the heat-resistant particles and the ether polymer can further enhance the overall heat resistance and ion transport performance, etc. of the separator.

In some embodiments, based on the total mass of the polymer layer, a ratio of the percentage mass content of the ether polymer to the percentage mass content of the heat-resistant particles is (0.2 to 5): 1; and optionally (0.5 to 2): 1. When the content of the heat-resistant particles and the ether polymer is within the above range, the heat resistance and ion transport performance, etc. of the entire separator can be further improved.

In some embodiments, a coating weight of the polymer layer may range from 0.5 mg/1540.25 mm² to 5 mg/1540.25 mm². When the coating weight of the polymer layer is within the above range, the heat resistance and ion transport performance, etc. of the entire separator can be further improved.

In a second aspect, the present application provides a battery cell, including the separator according to any embodiment in the first aspect of the present application.

In a third aspect, the present application provides a battery, including the battery cell according to any embodiment in the second aspect of the present application.

In a fourth aspect, the present application provides an electrical apparatus, including the battery according to any embodiment in the third aspect of the present embodiment.

### BRIEF DESCRIPTION OF DRAWINGS

In order to illustrate the technical solutions of the embodiments of the present application more clearly, the following briefly introduces the drawings required in the embodiments of the present application. Apparently, the drawings described below are only some embodiments of the present application. For those of ordinary skill in the art, other drawings can also be obtained according to the drawings without any creative effort.
FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus including the battery cell of the present application as a power source.

The accompanying drawings may not be drawn according to the actual scale.

Description of reference numerals:
1, Battery pack; 2, Upper box body; 3, Lower box body; 4, Battery module;
5, Battery cell; 51, Case; 52, Electrode assembly;
53, Cover plate;
6, Electrical apparatus.

### DETAILED DESCRIPTION

Hereinafter, embodiments specifically disclosing a separator, a battery cell, a battery, and an electrical apparatus of the present application are described in detail. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

The term "alkyl group" covers both straight-chain and branched chain alkyl groups. For example, the alkyl group may be a C1-C5 alkyl group, a C1-C4 alkyl group, a C1-C3 alkyl group, and a C1-C2 alkyl group. In some embodiments, the alkyl group includes methyl, ethyl, propyl, isopropyl, butyl, isobutyl, and the like. In addition, the alkyl group may be arbitrarily substituted. When substituted, the substituent includes a fluorine atom.

The term "alkoxy group" refers to a group in which an alkyl group is connected to an oxygen atom by a single bond. For example, the alkoxy group may be a C₁ to C₅ alkoxy group, a C₁ to C₃ alkoxy group, and a C₁ to C₂ alkoxy group. In some embodiments, the alkoxy group may include methoxy, ethoxy and propoxy. In addition, the alkoxy group may be arbitrarily substituted.

The term "halogen atom" refers to a fluorine atom, a chlorine atom, a bromine atom and the like.

The term "hydrogen" refers to 1H (protium, H), 2H (deuterium, D) or 3H (tritium, T). In the respective embodiments, "hydrogen" may be 1H (protium, H).

A battery cell includes a positive electrode plate, a negative electrode plate, a separator, and an electrolyte solution. The separator is located between the positive electrode plate and the negative electrode plate to isolate the positive electrode plate from the negative electrode plate. There is a solid-liquid contact interface between the electrode plates and the electrolyte solution. A side reaction may occur on the contact interface, deteriorating performances of the battery cell. The positive electrode plate is used as an example for illustration. The positive electrode plate has a solid-liquid contact interface between a positive electrode active material contained in the positive electrode plate and the electrolyte solution, the positive electrode active material may have a side reaction with the electrolyte solution on the interface to deteriorate the storage performance of the battery cell, and the side reaction may produce products unfavorable to circulation of the battery cell, thereby deteriorating the storage performance of the battery cell.

In view of the above problems, an embodiment of the present application proposes a separator from the perspective of constructing an interface. The separator includes a separator body and a polymer layer arranged on at least one surface of the separator body, and polymer molecular chains in the polymer layer have chain segment flexibility. When the separator is applied to the battery cell, the polymer layer is in contact with the electrolyte solution, the polymer molecular chains are stretched and opened, and the electrolyte solution is able to diffuse between the molecular chains, thus forming a three-dimensional connected interface between the separator and the electrode plates. The interface has a mesh structure, which is conducive to increasing the rate of diffusion of active ions, such as lithium ions, from the electrolyte solution to the electrode plates, increasing conductivity of the separator, reducing concentration polarization, allowing the active ions to be quickly intercalated in the electrode plate and uniformly deposited, thereby improving the storage performance of the battery cell.

### Separator

In a first aspect, an embodiment of the present application provides a separator. The separator includes a separator body and a polymer layer arranged on at least one surface of the separator body, the polymer layer including an ether polymer, where the ether polymer is made into a sheet-like structural body; the sheet-like structural body is subjected to a dynamic frequency scanning test at (Tₘ+20)°C to obtain an elastic modulus G' - loss modulus G" curve, and the elastic modulus G' - loss modulus G" curve has a slope of K, where 1<K<∞, and Tₘ°C represents the melting temperature of the ether polymer.

Specifically, the preparation process of the sheet-like structural body is as follows: The polymer is dried in vacuum at 80°C for 12h. The dried polymer is hot pressed into a thin sheet by a vulcanizing press, with a hot pressing temperature set at (Tm+20)°C, a calendering thickness of 1-2 min, a calendering time of 2 min, and a pressure of 8 MPa. After calendering for 2 min, a sample is removed and placed on another vulcanizing press of the same type, with a cold-pressing pressure of 10 MPa. A polymer disc (sheet-like structural body) in a fixed size may be obtained by means of a circular die with a diameter of 25 mm. Illustratively, the sheet-like structural body may be a disc with a thickness of 1-2 mm and a diameter of 25 mm, or may be made in accordance with sample standards required for the test equipment.

According to conclusions of classical linear viscoelasticity, for the polymer, especially a linear polymer, the elastic modulus G' - loss modulus G" in an end region (interval range approaching to the maximum value of angular velocity) of the elastic modulus G' - loss modulus G" curve is consistent with the frequency dependence, and a longest chain of the polymer functions in the viscoelastic behavior.

The specific steps of the dynamic frequency scanning test are as follows: a TA-AR2000EX rotational rheometer (TAinstruments, USA) is used for performing the dynamic frequency scanning test, with a parallel plate diameter of 25 mm and a thickness of 0.9 mm. In order to ensure that the test is performed in a linear viscoelastic region, the dynamic frequency scanning test is performed at a strain of 2%, at a test temperature of Tm+20°C, and within a frequency scanning range of 500 rad/s≤w²≤0.05 rad/s, in order to be able to obtain data in the lowest possible frequency region.

The dynamic frequency scanning test may characterize the degree of entanglement of molecular chains in the solid-phase melting (melt state). Compared to a linear structure or a short-chain branch structure, a long-chain branch structure, a mesh structure and a low crosslinked structure have a high degree of entanglement and will show a behavior of deviation from a linear end, and the polymer will show a solid phase behavior. When the polymer of the present application meets the above range, the molecular chain entanglement state can be further reduced, which is conducive to diffusion of the electrolyte solution between molecular chains. Moreover, the polymer still maintains a certain molecular chain entanglement state, which is capable of locking the electrolyte solution inside the polymer, and is capable of reducing the risk of the polymer dissolving in the electrolyte solution and improving performance stability of the polymer. The polymer and the electrolyte solution can form a three-dimensional connected interface between the separator and the electrode plates, and the interface has a mesh structure, which is conducive to increasing the rate of diffusion of active ions, such as lithium ions, from the electrolyte solution to the electrode plates, increasing conductivity of the separator, reducing concentration polarization, and allowing the active ions to be quickly intercalated in the electrode plate and uniformly deposited, thereby improving the storage performance of the battery cell.

In some embodiments, 1<K≤100; and optionally, 1≤K≤10.

Illustratively, K may be 1.01, 1.1, 1.2, 1.5, 2, 5, 10, 15, 20, 30, 50, 100, 200, 500, 1000, 5000, 10000 or in a range consisting of any two of the above values.

In some embodiments, the ether polymer has a glass transition temperature of Tg in the unit of °C, where -100≤Tg≤50; and optionally, -80≤Tg≤30.

The glass transition temperature is a transition temperature in the process from freezing to motion of chain segments of the polymer. The glass transition temperature has a certain influence on the flexibility of the polymer molecular chains. The lower the glass transition temperature, the better the flexibility of the polymer molecular chains at room temperature. The higher the glass transition temperature, the worse the flexibility of the molecular chains at room temperature. The glass transition temperature can be measured by differential scanning calorimetry (DSC). Specifically, the test steps include taking 0.5 g to 0.8 g of sample, placing the sample in a carrier crucible, rising or lowering temperature of the sample in a nitrogen atmosphere, rising the temperature at a rate of 10°C/min from an initial temperature that is 20°C lower than the material intrinsic temperature Tg to a cut-off temperature that is 20°C higher than the material intrinsic temperature Tm , and determining the actual glass transition temperature Tg, the melting temperature Tm, etc., of the material based on the endothermic peak or exothermic peak or the transition point of the material during the process.

The glass transition temperature of the polymer is relatively low, the molecular chain segments are more flexible, and adjacent molecular chains are easier to open. Illustratively, the glass transition temperature of the ether polymer may be -100°C, -90°C, -80°C, -60°C, -30°C, 0°C, 30°C, 50°C or in a range consisting of any two of the above values.

In some embodiments, the ether polymer includes a building block represented by Formula (I), 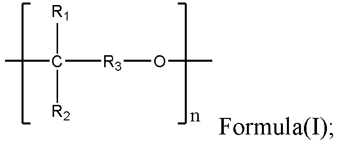 in Formula (I), R₁ and R₂ each independently include a hydrogen atom, a substituted or unsubstituted C1-C3 alkyl group or a substituted or unsubstituted C1-C3 alkoxy group; and R₃ includes a substituted or unsubstituted C1-C5 methylene group; optionally, R₁ and R₂ each independently include a hydrogen atom, a substituted or unsubstituted C1-C2 alkyl group; and/or R₃ includes a single bond and a substituted or unsubstituted C1-C4 methylene group.

Illustratively, the ether polymer includes at least one of a building block represented by Formula (I-1) to a building block represented by Formula (I-8),

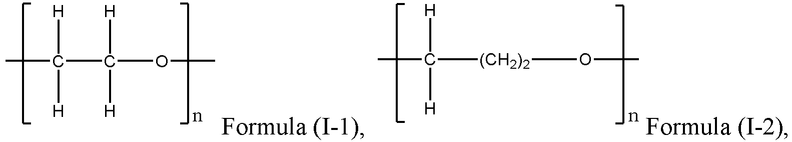

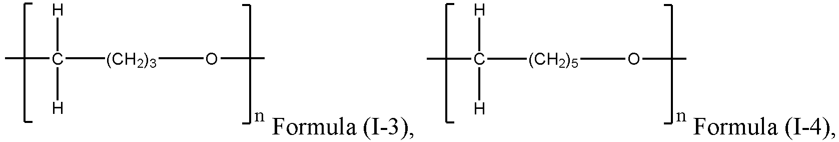

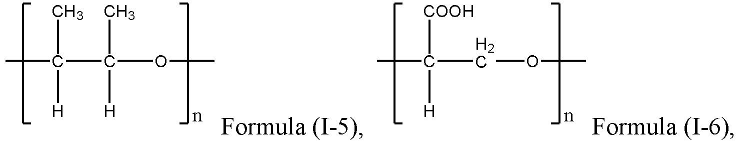

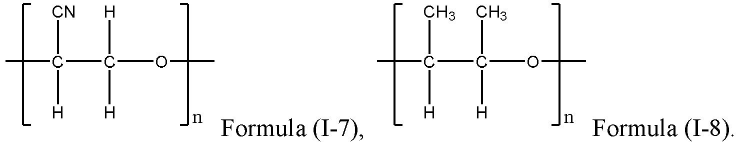

In some embodiments, the ether polymer includes a building block represented by Formula (II), 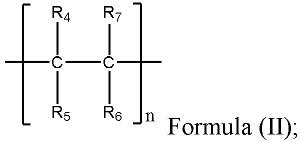
in Formula (II), R₄ to R₇ each independently include a hydrogen atom, a substituted or unsubstituted C1-C3 alkyl group, a substituted or unsubstituted C1-C3 alkoxy group or ether group, and at least one of R₄ to R₇ includes a substituted or unsubstituted C1-C3 alkoxy group or ether group;
and optionally, R₄ to R₇ each independently include a hydrogen atom, a substituted or unsubstituted C1-C2 alkyl group, a substituted or unsubstituted C1-C2 alkoxy group or ether group, and at least one of R₄ to R₇includes a substituted or unsubstituted C1-C2 alkoxy group or ether group.

In some embodiments, the ether polymer includes at least one of a building block represented by Formula (II-1) to a building block represented by Formula (II-7),

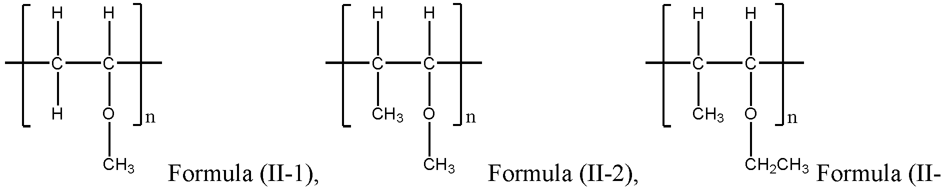

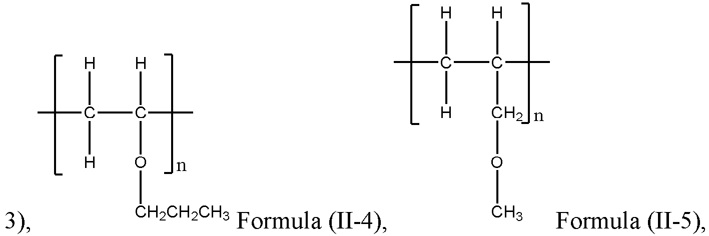

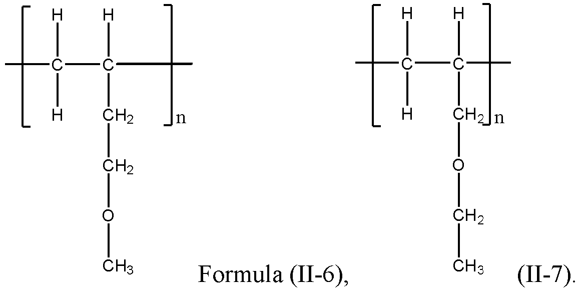

Monomers of the ether polymer are multi-membered rings, for example, six-membered rings or less membered rings, or short-chain monomers, which are favorable for polymerization to form a high content of -O- structure. This type of structure has a low degree of entanglement, which is conducive to improving the flexibility of the molecular chains and enabling the molecular chains to be stretched fully in the electrolyte solution, thus further improving interface properties.

The above polymer is only an example of a structural group of the main molecular chain. In the embodiments of the present application, the polymer may also be obtained by copolymerizing the above structural group with a small number of other types of structural groups (e.g., olefinic building blocks, ester monomers, nitrile monomers, amide monomers, and other building blocks).

The groups of the polymer of the present application may be tested using infrared spectrophotometry IR. Specifically, the polymer is tested with a ThermoNicoletNexus 670 Fourier transform infrared spectroscopy - attenuated total reflectance (FTIR-ATR), and then tested with reference to the standard GB/T6040-2002. Test range: ATR method 600-4000 cm⁻¹. Repeatability: ±2 cm⁻¹. Resolution: superior to 4 cm⁻¹. Transmission depth: 0.2-0.6 µm.

The structure of the polymer of the present application may be tested using nuclear magnetic resonance NMR. Specifically, 1HNMR and 13CNMR are performed on a VarianMercuryPlus-400 NMR instrument at a testing temperature of 20°C, with TMS as an internal standard, CDCl₃ as a solvent, and a plasmon resonance frequency of 400 MHz.

The type of the polymer monomers of the present application (especially applicable to monomers with a small percentage in the polymer) may be tested by means of Py-GC-MS. The specific test steps include: accurately weighing 0.5 mg of sample into a sample cup, fixing the sample cup to an injection rod and then placing it in a cracker installed near an injection port of a GC (gas chromatograph); after the temperature of the cracker reaches a preset temperature, pressing a sample button to allow the sample cup to drop into a core of the cracker quickly through a free-fall motion, where volatile components are instantly vaporized in an atmosphere of inert gas N₂, are carried by a carrier gas into GC columns for separation, and finally are detected by a flame ionization detector FID or mass spectrometer MS to obtain a gas chromatogram or a total ion flow diagram.

When the above groups are substituted, the substituents may include one or more of a nitrile group (-CN), a nitro group, a sulfonic acid group, a sulfonyl group, an amide group, a carboxyl group, an ester group, or a halogen atom (e.g., a fluorine atom, a bromine atom, and a chlorine atom). The above substituents are high-pressure-resistant substituents, which are more conducive to stabilizing the structure of the polymer.

In some embodiments, n is selected from positive integers of 1500 to 25000.

Optionally, n is selected from positive integers of 3000 to 18000.

In some embodiments, the ether polymer has a molecular weight ranging from 1.2x10⁵g/mol to 1.0x10⁶g/mol.

When the molecular weight of the ether polymer is within the above range, the molecular chains of the ether polymer can be stretched in the electrolyte solution, but are not easily completely dissolved and dispersed by the electrolyte solution, which is beneficial to regulating the uniform distribution and dispersion of the molecular chains of the ether polymer in the electrolyte; and can further improve the flexibility between the molecular chains of the ether polymer, and the interaction force between the molecular chains is relatively weak, which is beneficial for the solvent molecules in the electrolyte solution to open the molecular chains, enter between the molecular chains, and be wrapped by the molecular chains, thereby facilitating the active ions entering the active material through the solvent, thereby realizing the smooth and rapid migration of the active ions. For example, the molecular weight of the ether polymer may be 1.2×10⁵g/mol, 2×10⁵g/mol, 5×10⁵g/mol, 8×10⁵g/mol, 1×10⁶g/mol, and 1.5×10⁶g/mol, or in a range consisting of any two of the above values.

The molecular weight of the polymer is a well-known meaning in the art, may be determined by devices and methods commonly used in the art, and may be tested by gel permeation chromatography GPC. The specific test steps include: taking an appropriate amount of sample to be tested (the sample has a concentration that ensures a shade percentage of 8%-12%), adding 20 ml of deionized water, while performing external ultrasonic vibration for 5min (53KHz/120W), to ensure that the sample is completely dispersed, and after that, the sample is determined in accordance with the GB/T19077-2016/ISO13320:2009 standard.

Alternatively, the test is carried out using a multi-angle laser light scattering instrument MALLS, specifically, a combination instrument of a GPC with a DawnHeleos II multi-angle laser light scattering detector, an OptilabT-rEX refractive index (RI) detector, and a ViscoStar II viscometer is used (Wyatt Technology Corporation, USA). The test is carried out at 30°, using tetrahydrofuran as a mobile phase at a flow rate of 1.0 ml/min. In the test, commercial software ASTRA6 is used to process the SEC-SAMLL data to obtain molecular weight parameters.

When the polymer in the embodiments of the present application further satisfies one or more of the following conditions, the storage performance of the battery cell can be further improved.

In some embodiments, the ether polymer is added to a first solvent at 70°C. to form an ether polymer system; the ether polymer system is subjected to standing at 70°C for 8h, and standing at 25°C for the time of ≥24h; after the two stages of standing, the ether polymer system is partially transformed into a gel-state material by dissolution and adsorption; and then the ether polymer system is filtered through a 200-mesh filter screen, with a first substance remained. The ether polymer has a mass of q in the unit of g; the first substance has a mass of m in the unit of g; and the ether polymer and the first substance satisfy: 5≤m/q≤1000; optionally, 10≤m/q≤1000; further optionally, 10≤m/q≤50. Illustratively, m/q may be 5, 10, 20, 25, 28, 30, 32, 35, 40, 50, 80, 100, 200, 500, and 1000 or in a range consisting of any two of the above values.

Illustratively, based on the mass of the polymer system, a ratio of the mass content of the polymer to the mass content of the first solvent ranges from 1:100 to 1:10, such as 3:50.

Illustratively, the first solvent is the same as or similar to the solvent of the electrolyte solution, and the first solvent may include at least one of a carbonate solvent and an ether solvent. For example, the carbonate solvent includes a cyclic carbonate solvent and/or a linear carbonate solvent.

As an example , the cyclic carbonate solvent includes one or more of ethylene carbonate EC, vinylene carbonate VC, fluoroethylene carbonate FEC, difluoroethylene carbonate DFEC, vinyl ethylene carbonate VEC, and dicaprylyl carbonate CC.

As an example, the linear carbonate solvent includes one or more of dimethyl carbonate DMC, diethyl carbonate DEC, methyl ethyl carbonate EMC, diphenyl carbonate DPC, methyl allyl carbonate MAC, and polycarbonate VA.

As an example, an ether solvent includes one or more of tetrahydrofuran THF, 2-methyltetrahydrofuran 2me-thf, 1,3-dioxolane DOL, dimethoxymethane DMM, 1,2-dimethoxyethane DME, and diethylene glycol dimethyl ether DG.

Optionally, the first solvent may further contain a lithium salt and an electrolyte additive, such as lithium hexafluorophosphate, vinylidene carbonate VC, and fluoroethylene carbonate FEC.

In the present application, m/q is also referred to as precipitation number, which characterizes the capacity of transforming the polymer and the electrolyte solution into a gel-state material.

The first substance mainly includes a gel-state material formed by the polymer and the first solvent. In the gel-state material, the molecular structure of the polymer remains unchanged substantially.

In some embodiments, the first substance is dried at 80°C for 12h to remove the first solvent in the first substance, and the first substance is mainly composed of the polymer described above after drying, as determined by infrared spectrophotometry IR or nuclear magnetic resonance NMR.

The embodiments of the present application can realize the stretching of the polymer molecular chains by increasing the temperature within a safety working temperature range of the battery cell, thereby promoting the mutual attraction and physical bonding of the polymer molecular chains and the electrolyte solution. At room temperature, the activity of the ether polymer molecular chain segments is reduced, and they remain attached to the surface of the isolation body and lock the electrolyte solution in the spatial environment where the polymer is located, forming a gel or a gel-like state, which can increase the transmission rate of active ions such as lithium ions and improve the cycling performance and storage performance.

In the embodiments of the present application, the separator includes an separator body and a polymer layer, the polymer layer being arranged on at least one surface of the isolation body, which means that the polymer layer may be arranged on one of surfaces of the separator or on both surfaces of the separator. Since the separator has various structural forms, the polymer layer has various arrangement forms accordingly. The ether polymer can be dispersed in the solvent to form a polymer mixture system, and the polymer mixture system is coated on the separator body by a coating process such as atomizing spray and gravure coating.

In some embodiments, the separator body includes a substrate, and the polymer layer is arranged on at least one surface of the substrate.

In some other embodiments, the separator body includes a substrate and a heat-resistant coating, the heat-resistant coating is arranged on at least one surface of the substrate, and the polymer layer is arranged on a surface of the heat-resistant coating facing away from the substrate. It will be appreciated that the heat-resistant coating may be arranged on one surface of the substrate, or on both surfaces of the substrate.

There is no particular limitation on the material of the substrate in the embodiments of the present application, and any well-known substrate with good chemical and mechanical stability may be used. For example, the substrate may include at least one of porous polyolefin resin film (e.g., at least one of polyethylene, polypropylene, and polyvinylidene fluoride), porous fiberglass, and porous nonwoven fabric. The substrate may be a single-layer film or a multi-layer composite film. When the substrate is a multi-layer composite film, the materials of the layers may be the same or different.

In some embodiments, the porosity of the substrate is greater than or equal to 25%, and optionally ranges from 25% to 50%. When the porosity of the substrate is within the above range, the air permeability of the substrate can be improved, which facilitates the migration of active ions. Moreover, since the porosity is relatively small, the mechanical properties of the substrate can be improved, and a good support effect can be provided for the polymer layer.

In some embodiments, the thickness of the substrate may be less than or equal to 16 µm, and optionally 5µm to 12 µm. Illustratively, the thickness of the substrate may be 1µm, 2µm, 3µm, 5µm, 10µm, 12µm, 15µm, and 16µm or in a range consisting of any two of the above values.

The heat-resistant coating may include heat-resistant particles. In some embodiments, the heat-resistant particles may include at least one of inorganic particles and organic particles. The heat-resistant particles may add to improve the heat resistance performance of the separator.

In some embodiments, the percentage mass content of inorganic particles in the heat-resistant coating is ≤30. Illustratively, the percentage mass content of inorganic particles in the heat-resistant coating is 1%, 2%, 3%, 4%, 5%, 6%, 7%, 8%, 9%, 10%, 15%, 20%, 25%, and 30% or in a range consisting of any two of the above values.

The inorganic particles may include at least one of inorganic particles having a dielectric constant of 5 or higher, inorganic particles capable of transporting active ions, and inorganic particles capable of undergoing electrochemical oxidation and reduction.

In some embodiments, the inorganic particles having a dielectric constant of 5 or higher may include at least one of boehmite (γ-AlOOH), aluminum oxide (Al₂O₃), barium sulfate (BaSO₄), magnesium oxide (MgO), magnesium hydroxide (Mg(OH)₂), silicon oxide SiOₓ(0<x≤2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃(PZT), Pb₁₋ₘLaₘZr₁₋ₙTiₙO₃(PLZT, 0<m<1, 0<n<1) and Pb(Mg₃Nb_{2/3})O₃-PbTiO₃(PMN-PT).

In some embodiments, the inorganic particles capable of transporting active ions may include at least one of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} type glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ type glass (LiₓSi_{y}S_{z}, 0<x<3, 0<y<2, 0<z<4) and P₂S₅ type glass(LiₓP_{y}S_{z}, 0<x<3, 0<y<3, 0<z<7).

In some embodiments, the inorganic particles capable of undergoing electrochemical reaction and reduction may include at least one of lithium-containing transition metal oxides, olivine-structural lithium-containing phosphates, carbon-based materials, silicon-based materials, tin-based materials, and lithium-titanium compounds.

In some embodiments, the heat-resistant coating may further include other organic particles, for example, the organic particles may include at least one of polystyrene, polyethylene, polyimide, melamine resin, phenolic resin, polypropylene, polyester (e.g., polyethylene terephthalate, polyethylene naphthalene dicarboxylate, and polybutyl terephthalate), polyphenylene sulfide, polyarylamide, polyamidimide, polyimide, a copolymer of butyl acrylate and ethyl methacrylate and other mixtures.

In some embodiments, the heat-resistant coating layer may further include a binder. As an example, the binder may include at least one of an aqueous acrylic resin (e.g., acrylic acid, methacrylic acid, a sodium acrylate monomer homopolymer or a copolymer with other comonomers), polyvinyl alcohol (PVA), an isobutylene-maleic anhydride copolymer, and polyacrylamide.

In some embodiments, the thickness of the heat-resistant coating may be ≤ 4 µm. This way helps to increase energy density of the battery cell. In the embodiments of the present application, the thickness of the heat-resistant coating refers to the thickness of the heat-resistant coating on one side of the substrate. Illustratively, the thickness of the heat-resistant coating may be 0.1µm, 0.5µm, 1µm, 1.5µm, 2µm, 2.5µm, 3µm, 3.5µm, and 4µm or in a range consisting of any two of the above values.

In some embodiments, the polymer layer may further include heat-resistant particles. The synergistic effect of the heat-resistant particles and the ether polymer can further enhance the heat resistance and ion transport performance, etc. of the entire separator. The ether polymer and the heat-resistant particles can be dispersed in the solvent to form a polymer mixture system, and the polymer mixture system is coated on the separator body by a coating process such as atomizing spray and gravure coating.

In some embodiments, based on the total mass of the polymer layer, a ratio of the percentage mass content of the ether polymer to the percentage mass content of the heat-resistant particles is (0.2 to 5.0):1; and optionally (0.5 to 2.0):1. When the content of the heat-resistant particles and the ether polymer is within the above range, the heat resistance and ion transport performance, etc. of the entire separator can be further improved. Illustratively, the ratio of the percentage mass content of the ether polymer to the percentage mass content of the heat-resistant particles may be 0.2:1, 0.3:1, 0.4:1, 0.5:1, 0.6:1, 0.8:1, 1.0:1, 1.2:1, 1.5:1, 1.8:1, 2.0:1, 2.5:1, 2.8:1, 3.0:1, 3.2:1, 3.5 1, 3.8:1, 4.0:1, 4.2:1, 4.5:1, 4.8:1, and 5.0:1 or in a range consisting of any two of above values.

In some embodiments, a coating weight of the polymer layer may range from 0.5 mg/1540.25 mm² to 5 mg/1540.25 mm². When the coating weight of the polymer layer is within the above range, the heat resistance and ion transport performance, etc. of the entire separator can be further improved.

Optionally, the coating weight of the polymer layer may range from 0.5 mg/1540.25 mm² to 3.5 mg/1540.25 mm².

Illustratively, the coating weight of the polymer layer may be 0.5 mg/1540.25 mm², 0.6 mg/1540.25 mm², 0.8 mg/1540.25 mm², 1.0 mg/1540.25 mm², 1.2 mg/1540.25 mm², 1.5 mg/1540.25 mm², 1.8 mg/1540.25 mm², 2.0 mg/1540.25 mm², 2.5 mg/1540.25 mm², 3 mg/1540.25 mm², 3.5 mg/1540.25 mm², 4 mg/1540.25², 4.5 mg/1540.25 mm², and 5 mg/1540.25 mm² or in a range consisting of any two of the above values.

In the embodiments of the present application, the coating weight of the polymer layer refers to a one-sided weight. For example, when both the surfaces of the substrate are provided with the polymer layer, the coating weight here refers to the coating weight of the polymer layer coated on one surface of the substrate.

The coating weight is well known in the art and can be detected by using devices and methods well known in the art. The coating weight of the polymer in the separator can be obtained by cutting the same mother roll substrate and the separator into small discs of 1540.25 mm², and weighing 10 small discs of the separator respectively, followed by calculation.

### Battery cell

In a second aspect, an embodiment of the present application proposes a battery cell. The battery cell includes an electrode assembly and an electrolyte solution; the electrode assembly includes a positive electrode plate, a negative electrode plate, and a separator; the separator is disposed between the positive electrode plate and negative electrode plate. The separator includes the separator as in any of the embodiments in the first aspect of the present application.

### [Positive electrode plate]

The positive electrode plate includes a positive electrode current collector and a positive electrode active material layer arranged on at least one surface of the positive electrode current collector.

As an example, the positive electrode current collector has two surfaces opposite in its own thickness direction, and the positive electrode active material layer is arranged on either one or both of the two opposite surfaces of the positive electrode current collector.

The positive electrode active material layer includes a positive electrode active material, and the positive electrode active material may be a positive electrode active material known in the art for use in the battery cell. As an example, the positive electrode active material may include at least one of the following materials: a lithium-containing phosphate compound, a lithium-containing transition metal oxide, a sodium-containing phosphate compound, and a sodium-containing transition metal oxide.

Illustratively, the general formula of an olivine phosphate active material (lithium-containing phosphate compound) is: LiₓA_{y}MeₐM_{b}P_{1-c}X_{c}Y_{z}, where 0≤x≤1.3, 0≤y≤1.3, and 0.9≤x+y≤1.3; 0.9≤a≤1.5, 0≤b≤0.5, and 0.9≤a+b≤1.5; 0≤c≤ 0.5; and 3≤z≤ 5; A includes one or more of Na, K and Mg; Me includes one or more of Mn, Fe, Co and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine phosphate active material includes one or more of LiFePO₄, LiMnPO₄, LiNiPO₄, and LiCoPO₄.

Illustratively, the lithium transition metal oxide may be a layered material, e.g. ternary, lithium nickel oxide, lithium cobalt oxide, lithium manganese oxide, lithium-rich layered and rock salt-phase layered materials, etc. The general formula of the positive electrode active material in layered structure is: LiₓA_{y}NiₐCo_{b}Mn_{c}M_{(1-a-b-c)}Y_{z}, where 0≤x≤2.1, 0≤y≤2.1, and 0.9≤x+y≤2.1; 0≤a≤1, 0≤b≤1, 0≤c≤1, and 0.1≤a+b+c≤1; and 1.8≤z≤3.5; A includes one or more of Na, K and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La and Ce; and Y includes one or more of O and F. Optionally, y=0. Specifically, the positive electrode active material in layered structure may include one or more of lithium cobalt oxide LCO, lithium nickel oxide LNO, lithium manganese oxide LMO, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811) and NCA.

In some embodiments, the positive electrode current collector may be a metal foil current collector or a composite current collector. As an example, the metal foil may be a copper foil or an aluminum foil. The composite current collector may include a polymeric material substrate layer and a metal material layer formed on at least one surface of the polymeric material substrate layer. As an example, the metal material may include one or a combination of more selected from aluminum, an aluminum alloy, nickel, a nickel alloy, titanium, a titanium alloy, silver, and a silver alloy; and the polymeric material substrate layer may include one or a combination of more selected from polypropylene (PP), polyethylene terephthalate (PET), polybutylene terephthalate (PBT), polystyrene (PS), and polyethylene (PE).

In some embodiments, the positive electrode active material layer further optionally includes a positive electrode conductive agent. The embodiments of the present application do not specifically limit the type of the positive electrode conductive agent. As an example, the positive electrode conductive agent may include one or a combination of more of superconducting carbon, conductive carbon black, conductive graphite, acetylene black, carbon black, Ketjen black, carbon dot, carbon nanotube, graphene, and carbon nanofiber. In some embodiments, based on the total mass of the negative electrode active material layer, the percentage mass content of the positive electrode conductive agent is less than 5%.

In some embodiments, the positive electrode active material layer further optionally includes a positive electrode binder. The embodiments of the present application do not specifically limit the type of the positive electrode binder. As an example, the positive electrode binder may include one or a combination of more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on the total mass of the positive electrode active material layer, the percentage mass content of the positive electrode binder is less than 5%. The positive electrode binder has a crystallinity higher than that of the ether polymer in the embodiments of the present application. The positive electrode binder has a melting temperature higher than that of the ether polymer in the embodiments of the present application.

The positive electrode active material layer is generally formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be but is not limited to N-methylpyrrolidone (NMP). The preparation of the positive electrode plate is not limited to the above method, and the preparation method described above may also be used.

### [Negative electrode plate]

In some embodiments, the negative electrode plate includes a negative electrode current collector and a negative electrode active material layer arranged on at least one surface of the negative electrode current collector and including a negative electrode active material.

Illustratively, the negative electrode current collector has two opposite surfaces in the direction of its own thickness, and the negative electrode active material layer is provided on either or both of the two opposite surfaces of the negative electrode current collector.

The negative electrode active material may be a negative electrode active material that is commonly known in the art and is applied to the battery cell. As an example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy. The tin-based material may include at least one of elemental tin, a tin oxide, and a tin alloy.

In some embodiments, the negative electrode active material layer further optionally includes a negative electrode conductive agent. The embodiments of the present application do not specifically limit the type of the negative electrode conductive agent. As an example, the negative electrode conductive agent may include at least one of superconducting carbon, conductive graphite, acetylene black, carbon black, Ketjen black, carbon dot, carbon nanotube, graphene, and carbon nanofiber. In some embodiments, based on the total mass of the negative electrode active material layer, the percentage mass content of the negative electrode conductive agent is ≤5%.

In some embodiments, the negative electrode active material layer further optionally includes a negative electrode binder. The embodiments of the present application do not specifically limit the type of the negative electrode binder. As an example, the binder may include at least one of styrene butadiene rubber (SBR), water-soluble unsaturated resin SR-1B, water-based acrylic resin (e.g., polyacrylic acid PAA, polymethacrylic acid PMAA, and sodium polyacrylate PAAS), polyacrylamide (PAM), polyvinyl alcohol (PVA), sodium alginate (SA) and carboxymethyl chitosan (CMCS). In some embodiments, based on the total mass of the negative electrode active material layer, the percentage mass content of the negative electrode binder is ≤5%.

In some embodiments, the negative electrode active material layer further optionally includes other auxiliaries. As an example, the other additives may include thickeners, for example, sodium carboxymethyl cellulose (CMC), PTC thermistor materials and the like. In some embodiments, based on the total mass of the negative electrode active material layer, the percentage mass content of the other auxiliaries is ≤2%.

In some embodiments, the negative electrode current collector may be a metal foil or a composite current collector. In an example, the metal foil may be a copper foil. The composite current collector may include a polymeric material substrate layer and a metal material layer formed on at least one surface of the polymeric material substrate layer. As an example, the metal material may include at least one of copper, a copper alloy, nickel, a nickel alloy, titanium, a titanium alloy, silver, and a silver alloy. As an example, the polymeric material substrate layer may include at least one of polypropylene (PP), polyethylene terephthalate (PET), polybutylene terephthalate (PBT), polystyrene (PS), and polyethylene (PE).

The negative electrode active material layer is generally formed by coating a negative electrode slurry on the negative electrode current collector, followed by drying and cold pressing. The negative electrode slurry is generally formed by dispersing the negative electrode active material, the optional conductive agent, the optional binder, and other optional additives in a solvent and sufficiently stirring the mixture. The solvent may be but is not limited to N-methylpyrrolidone (NMP) or deionized water. The preparation of the negative electrode plate is not limited to the above method, and the preparation method described above may also be used.

The negative electrode plate does not exclude additional functional layers other than the negative electrode active material layer. For example, in some embodiments, the negative electrode plate in the present application further includes a conductive primer coating (e.g., composed of a conductive agent and a binder) sandwiched between the negative electrode current collector and the negative electrode active material layer and arranged on a surface of the negative electrode current collector. In some other embodiments, the negative electrode plate of the present application further includes a protective layer covering a surface of the negative electrode active material layer.

### [Electrolyte solution]

During a charging and discharging process of the battery cell, active ions are intercalated and deintercalated back and forth between the positive electrode plate and the negative electrode plate, and the electrolyte solution serves to conduct the active ions between the positive electrode plate and the negative electrode plate. The present application has no specific limitation on the type of the electrolyte solution, which can be selected according to actual requirements.

The electrolyte solution contains an electrolyte salt and a solvent. Types of the electrolyte salt and the solvent are not specifically limited, and may be selected according to actual requirements.

When the battery cell in the present application is a lithium-ion battery, as an example, the electrolyte salt may include, but is not limit to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP) and lithium tetrafluoro(oxalato)phosphate (LiTFOP).

When the battery cell of the present application is a sodium-ion battery, as an example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium-difluoro (oxalato)borate (NaDFOB), sodium bis(oxalato)borate (NaBOB), sodium difluorophosphate (NaPO₂F₂), sodium-difluoro bis(oxalato) phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), ethylsulfonyl ethane (ESE), tetrahydrofuran THF, 2-methyltetrahydrofuran 2me-thf, 1,3-dioxolane DOL, dimethoxymethane DMM, 1,2-dimethoxyethane DME and diethylene glycol dimethyl ether DG.

In some embodiments, the electrolyte solution further optionally includes an additive. For example, the additive may include a negative electrode film-forming additive, or may include a positive electrode film-forming additive, and may further include an additive capable of improving certain performances of the battery, such as an additive for improving the overcharging performance of the battery, an additive for improving the high-temperature performance of the battery, and an additive for improving the low-temperature power performance of the battery.

In some embodiments, the positive electrode plate, the separator, and the negative electrode plate may be made into an electrode assembly by a winding process and/or a stacking process.

In some embodiments, the battery cell may include an outer package. The outer package can be used to encapsulate the above-mentioned electrode assembly and electrolyte solution.

In some embodiments, the outer package of the battery cell can be a hard shell, such as a hard plastic shell, an aluminum shell, and a steel shell. The outer package of the secondary battery may also be a soft pack, such as a pouch. The material of the pouch may be a plastic, such as at least one of polypropylene (PP), polybutylene terephthalate (PBT) and polybutylene succinate (PBS).

In some embodiments, the positive electrode plate, the separator, and the negative electrode plate may be made into an electrode assembly by a winding process or a stacking process.

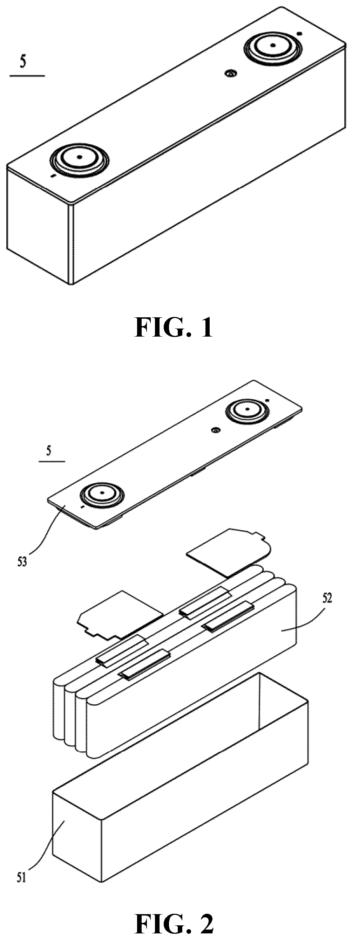

The shape of the battery cell is not particularly limited in the present application, and may be a cylinder shape, a square shape, or any other shape. For example, FIG. 1 shows a battery cell 5 in a square structure as an example.

In some embodiments, referring to FIGS. 1 and 2, the outer package may include a case 51 and a cover plate 53. The case 51 may include a base plate and a side plate connected onto the base plate, and the base plate and the side plate enclose an accommodating cavity. The case 51 has an opening in communication with the accommodating cavity, and the cover plate 53 is configured to cover the opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process or a stacking process; the electrode assembly is placed in the outer package; the electrolyte solution is poured in after drying; and the battery cell is obtained through processes such as vacuum encapsulation, standing, formation, and shaping.

In some embodiments of the present application, the battery cell according to the present application can be assembled into a battery module, the number of battery cells included in the battery module can be multiple, and the specific number can be adjusted according to the application and capacity of the battery module.

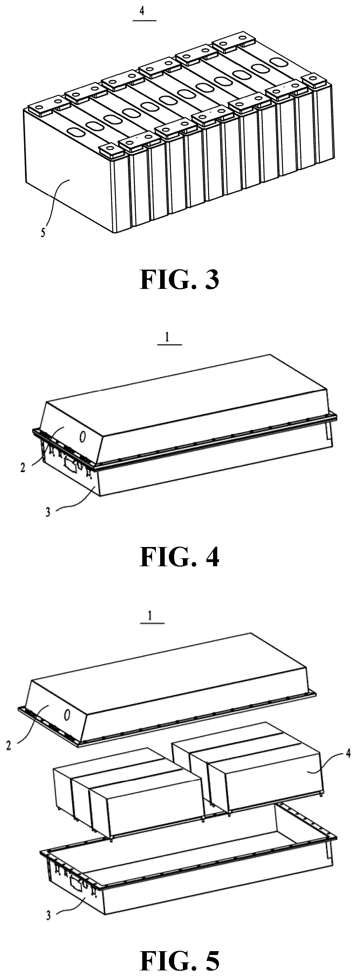

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the foregoing battery modules can further be assembled into a battery pack, and the number of battery modules included in the battery pack can be adjusted according to the application and capacity of the battery pack.

Both the battery module 4 and the battery pack can be used as specific examples of batteries in the embodiments of the present application.

FIGS. 4 and 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

### Electrical apparatus

In a third aspect, the present application provides an electrical apparatus, which includes at least one of the battery cell, the battery module, and the battery pack of the present application. The battery cell, the battery module and the battery pack may be used as a power source of the electrical apparatus, or may be used as an energy storage unit of the electrical apparatus. The electrical apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

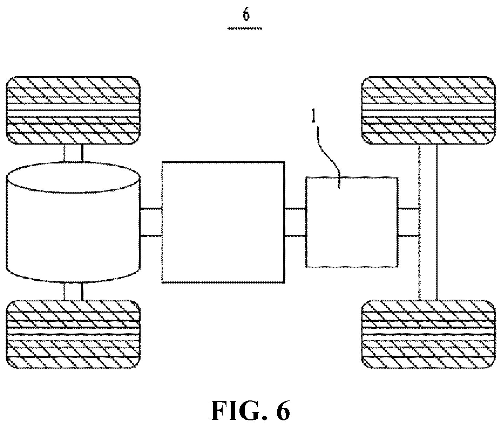

The battery cell, the battery module or the battery pack can be selected for the electrical apparatus according to the use requirements thereof. FIG. 6 is a schematic view of an electrical apparatus as an example. The electrical apparatus 6 is an all-electric vehicle, a hybrid electric vehicle, or a plug-in hybrid electric vehicle, etc. In order to meet the requirements of the electrical apparatus for high power and high energy density, a battery pack 1 or a battery module may be used. As another example, the electrical apparatus may be a mobile phone, a tablet personal computer, a laptop, etc. The electrical apparatus is generally required to be thin and light, and may use a battery cell as a power source.

### Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### Example 1 Preparation of lithium-ion battery

### (1) Preparation of positive electrode plate:

An aluminum foil with a thickness of 12 µm was used as a positive electrode current collector.

A positive electrode active material LiNi_{0.6}Co_{0.2}Mn_{0.2}O₂(NCM622), a conductive agent carbon black, and a binder polyvinylidene difluoride (PVDF) were mixed and blended sufficiently in an appropriate amount of N-methylpyrrolidone (NMP) to obtain a positive electrode slurry. A mass ratio of NCM622, the conductive agent carbon black, the PVDF and the N-methylpyrrolidone (NMP) in the positive electrode slurry was 97.5:1.4:1.1. The positive electrode slurry was coated on the current collector aluminum foil, dried at 85°C, then cold-pressed, trimmed, cut and slit, and then dried at 100°C under vacuum for 4h, to obtain a positive electrode plate.

### (2) Preparation of negative electrode plate:

A copper foil with a thickness of 8 µm was used as a negative electrode current collector.

A negative electrode active material artificial graphite, a conductive agent carbon black, a binder styrene-butadiene rubber (SBR), and a thickener sodium hydroxymethylcellulose (CMC) were mixed uniformly at a weight ratio of 97.4: 2: 0.5:0.1, and then added to deionized water to obtain a negative electrode slurry. The negative electrode slurry was coated on the current collector aluminum foil, dried at 85°C, then cold-pressed, trimmed, cut, and slit, and then dried under vacuum at 120°C for 12h to obtain a negative electrode plate.

### (3) Preparation of electrolyte solution:

In an environment with a water content of less than 10 ppm, non-aqueous organic solvents ethylene carbonate (EC) and ethyl methyl carbonate (EMC) were mixed in a volume ratio of 3 : 7 to obtain a solvent of electrolyte, and then lithium salt LiPF₆ and the mixed solvent were mixed to prepare an electrolyte solution with a lithium salt concentration of 1 mol/L.

### (4) Preparation of separator

A polypropylene film (PE) with a thickness of 7 µm was used as a substrate.

15 g of ether polymer was dispersed in 100 mL of a solvent of dimethyl carbonate DMC to form a mixture system, and the mixture system was atomized and sprayed on both surfaces of the PE film to form a polymer layer, respectively. Water was used as an atomizing solvent, and the mass percent of the mixture system was 1%.

### (5) Preparation of lithium-ion battery:

The positive electrode plate, the separator, and the negative electrode plate mentioned above were stacked in order, so that the separator was positioned between the positive electrode plate and the negative electrode plate to play a separating role, and then winding was performed so that an electrode assembly can be obtained; the electrode assembly was put into an outer package shell, and after drying, the electrolyte solution was injected thereto; and the lithium ion battery was obtained through processes such as vacuum encapsulation, standing, formation, and shaping.

### Comparative Example 1

A lithium-ion battery was prepared by a method similar to that of Example 1. The difference from Example 1 is that the separator in Comparative Example 1 was the polyethylene film (PE) with a thickness of 7 µm.

### Comparative Example 2

A lithium-ion battery was prepared by a method similar to that of Example 1. The difference from Example 1 is that the ether polymer of the separator in Comparative Example 2 was replaced with a different material.

### Example 2-1 to Example 2-3

A lithium-ion battery was prepared by a method similar to that of Example 1. The difference from Example 1 is that the ether polymer of the separator in Example 2-1 to Example 2-3 was replaced with a different material.

### Example 3-1 to Example 3-5

A lithium-ion battery was prepared by a method similar to that of Example 1. The difference from Example 1 is that the thickness of the polymer layer of the separator in Example 3-1 to Example 3-5 was adjusted.

### Example 4-1

A lithium-ion battery was prepared by a method similar to that of Example 1. The difference from Example 1 is that the setting position of the polymer layer of the separator in Example 4-1 was adjusted. Specifically, the preparation steps of the separator include:
The polypropylene film (PE) with a thickness of 7 µm was used as a separator substrate.

Silicon oxide particles and a binder, i.e., aqueous polyacrylic acid were mixed uniformly in an appropriate amount of solvent, i.e., deionized water at a mass ratio of 20:80 to obtain a coating slurry.

The prepared coating slurry was applied on both surfaces of the PE substrate by means of a coating machine to form a heat-resistant coating.

15 g of ether polymer was dispersed in 100 mL of a solvent of dimethyl carbonate DMC to form a mixture system, and the mixture system was atomized and sprayed on a surface of the heat-resistant coating to form a polymer layer, thereby obtaining a separator. Water was used as an atomizing solvent, and the mass percent of the mixture system was 1%.

### Example 4-2 to Example 4-6

A lithium-ion battery was prepared by a method similar to that of Example 1. The difference from Example 1 is that the composition of the polymer layer of the separator in Example 4-2 to Example 4-6 was adjusted. Specifically, the preparation steps of the separator include:
The polypropylene film (PE) with a thickness of 7 µm was used as a separator substrate.

Silicon oxide particles and 15g of ether polymer were dispersed in 100 mL of a solvent of dimethyl carbonate DMC to form a mixture system, and the mixture system was atomized and sprayed on a surface of the heat-resistant coating to form a polymer layer, thereby obtaining a separator. The mass ratio of the silicon oxide particles to the ether polymer in Example 4-2 is 1.5:1; the mass ratio of the silicon oxide particles to the ether polymer in Example 4-3 is 0.5:1; the mass ratio of the silicon oxide particles to the ether polymer in Example 4-4 is 2:1; the mass ratio of the silicon oxide particles to the ether polymer in Example 4-5 is 0.2:1; and the mass ratio of silicon oxide particles to the ether polymer in Examples 4-5 is 0.5:1.

Data of the examples and the comparative examples are as shown in Table 1.

### Tests

### 1. Lithium-ion battery capacity retention rate test

The lithium-ion battery prepared in the respective examples and comparative examples was charged to 4.25V at a constant current of 1/3C in a room temperature environment, then charged to a current of 0.05C at a constant voltage of 4.25V, followed by standing for 5 min, and then was discharged to 2.8V at a constant voltage of 1/3C, to obtain a capacity recorded as an initial capacity C0. It was then adjusted to 97% soc and transferred to a 60°C environment for storage. The above steps were repeated for the same battery described above, and a discharge capacity Cn of the battery every 30D was recorded at the same time, then the battery capacity retention rate Pn=Cn/C0*100% every 30D; and a scatter graph of battery capacity retention rate vs storage days was obtained, with the five point values of P1, P2...P5 as the vertical coordinates and the corresponding storage time as the horizontal coordinates. The data of battery capacity retention rate in the table was the data measured after storage for 120D under the above test conditions, that is, the value of P5.

### 2. Lithium-ion battery DC impedance test

The lithium-ion battery prepared in the respective examples and comparative examples was charged to 4.25V at a constant current of 1/3C at 25°C, then charged to a current of 0.05C at a constant voltage of 4.25V, followed by standing for 5 min, and then a voltage V1 was recorded. Then, the battery was discharged at 1/3C for 30s, a voltage V2 was recorded, and by (V2-V1)/1/3C, an internal resistance DCR1 of the battery after the first cycle was obtained. The battery was charged to 4.25V at a constant current of 1/3C in a room temperature environment, then charged to a current of 0.05C at a constant voltage of 4.25V, followed by standing for 5min, and then was discharged to 2.8V at a constant voltage of 1/3C, to obtain a capacity recorded as an initial capacity C0. It was then adjusted to 97% soc and transferred to a 60°C environment for storage. The above steps were repeated every 30D for the same battery described above, and the internal resistance DCRn of the battery for the nth time (n=1, 2, 3, 4, 5) was recorded at the same time; and a graph of storage days of the battery discharged DCIR was obtained, with the five point values of DCR1, DCR2, DCR3, DCR4, and DCR5 as the vertical coordinates and the corresponding number of cycles as the horizontal coordinates.

In the table, the battery internal resistance increase ratio = (DCRn-DCR1)/DCR1*100%, and the data in the table are data measured after storage for 120D under the above test conditions.

### Test results

The test results are as shown in Table 1.

**Table 1**

| Item | Ether polymer | | | | | | Polymer layer | Lithium-ion battery | |
|---|---|---|---|---|---|---|---|---|---|
| | Monomer 1 | Monomer 2 | Glass transition temperature Tg(°C) | Molecular weight (g/mol) | K | Sedimentation value m/q | Coating weight (mg/1540.25 mm²) | Capacity retention rate% | DCIR% |
| Comparative Example 1 | None | None | None | None | None | None | None | 80% | 40% |
| Comparative Example 2 | 100% Ethylene oxide | / | -67 | 400,000 | 0.9 | 1.5 | 1.5 | 82% | 35% |
| Example 1 | 80% Ethylene oxide | 20% Oxirane-2-carbethoxy | -45 | 250,000 | 1.2 | 12 | 1.5 | 90% | 14% |
| Example 2-1 | 90% Ethylene oxide | 10% Oxirane-2-carboxylic acid | -12 | 250,000 | 1.1 | 7 | 1.5 | 93% | 18% |
| Example 2-2 | 88% Ethyl vinyl ether | 12% Vinyl acetate | 0 | 300,000 | 1.6 | 15 | 1.5 | 95% | 10% |
| Example 2-3 | 100% Ethylene oxide | / | -65 | 200,000 | 1.3 | 10 | 1.5 | 88% | 21% |
| Example 3-1 | 80% Ethylene oxide | 20% Oxirane-2-carbethoxy | -45 | 250,000 | 1.2 | 12 | 1.0 | 95% | 8% |
| Example 3-2 | 80% Ethylene oxide | 20% Oxirane-2-carbethoxy | -45 | 250,000 | 1.2 | 12 | 2.0 | 93% | 11% |
| Example 3-3 | 80% Ethylene oxide | 20% Oxirane-2-carbethoxy | -45 | 250,000 | 1.2 | 12 | 0.5 | 87% | 23% |
| Example 3-4 | 80% Ethylene oxide | 20% Oxirane-2-carbethoxy | -45 | 250,000 | 1.2 | 12 | 3.0 | 91% | 14% |
| Example 3-5 | 80% Ethylene oxide | 20% Oxirane-2-carbethoxy | -45 | 250,000 | 1.2 | 12 | 3.5 | 90% | 17% |
| Example 4-1 | 80% Ethylene oxide | 20% Oxirane-2-carbethoxy | -45 | 250,000 | 1.2 | 12 | 1.5 | 96% | 6% |
| Example 4-2 | 80% Ethylene oxide | 20% Oxirane-2-carbethoxy | -45 | 250,000 | 1.2 | 12 | 1.5 | 93% | 14% |
| Example 4-3 | 80% Ethylene oxide | 20% Oxirane-2-carbethoxy | -45 | 250,000 | 1.2 | 12 | 1.5 | 92% | 15% |
| Example 4-4 | 80% Ethylene oxide | 20% Oxirane-2-carbethoxy | -45 | 250,000 | 1.2 | 12 | 1.5 | 94% | 10% |
| Example 4-5 | 80% Ethylene oxide | 20% Oxirane-2-carbethoxy | -45 | 250,000 | 1.2 | 12 | 1.5 | 86% | 20% |
| Example 4-6 | 80% Ethylene oxide | 20% Oxirane-2-carbethoxy | -45 | 250,000 | 1.2 | 12 | 1.5 | 89% | 17% |

In Table 1, 85% ethylene oxide refers to ethylene oxide having a molar percentage of 85% based on the total molar amount of ethylene oxide and oxirane-2-carbethoxy.

As can be seen from Table 1, compared to Comparative Example 1, the cycling performance and storage performance of the lithium-ion battery are improved by adding the ether polymer of the present application into the separator in the embodiments of the present application.

Although poly(ethylene oxide) is added to the separator in Comparative Example 2, the polymer can not effectively improve the cycling performance and storage performance of the lithium-ion battery. According to the embodiments of the present application, in case of 1<K<∞, especially 1<K≤100; and optionally, 1<K≤10, the arrangement of molecular chains of the polymer tends to be loose, the acting force between the molecular chains is small, adjacent molecular chains are easy to be opened; moreover, the chain segment motion is realized by intermolecular internal rotation to form the molecular chain structure with a high flexibility, which can more significantly improve the cycling performance and storage performance of the lithium-ion battery.

Although the present application has been described with reference to the preferred embodiments, various improvements may be made and components therein may be replaced with equivalents without departing from the scope of the present application. **In** particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A separator, comprising:
a separator body; and
a polymer layer arranged on at least one surface of the separator body, the polymer layer comprising an ether polymer,
wherein
the ether polymer is made into a sheet-like structural body; the sheet-like structural body is subjected to a dynamic frequency scanning test at (Tm+20)°C to obtain an elastic modulus G' - loss modulus G" curve, and the elastic modulus G' - loss modulus G" curve has a slope of K, where 1<K<∞, and Tm°C represents the melting temperature of the ether polymer.

2. The separator according to claim 1, wherein 1<K≤100; and optionally, 1<K≤ 10.

3. The separator according to claim 1 or 2, wherein
the ether polymer has a glass transition temperature of Tg in the unit of °C, where - 100≤Tg≤50; and optionally, -80≤Tg≤30.

4. The separator according to any one of claims 1 to 3, wherein the ether polymer comprises a building block represented by Formula (I), 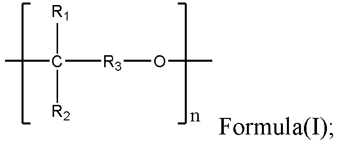 in Formula (I),
R₁ and R₂ each independently include a hydrogen atom, a substituted or unsubstituted C1-C3 alkyl group or a substituted or unsubstituted C1-C3 alkoxy group; and R₃ includes a substituted or unsubstituted C1-C5 methylene group;
optionally, R₁ and R₂ each independently include a hydrogen atom, a substituted or unsubstituted C1-C2 alkyl group; and/or
R₃ includes a single bond and a substituted or unsubstituted C1-C4 methylene group.

5. The separator according to claim 4, wherein the ether polymer comprises at least one of a building block represented by Formula (I-1) to a building block represented by Formula (I-8),

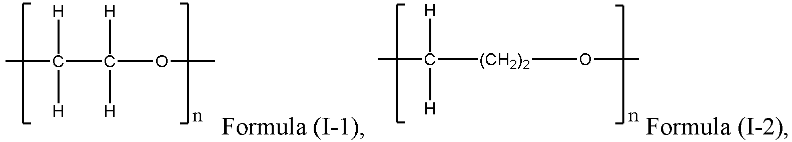

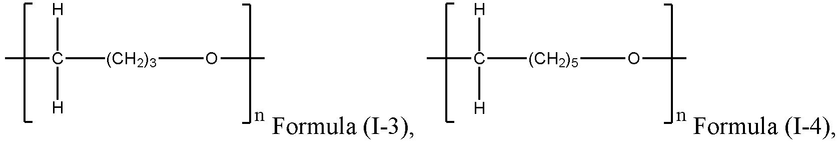

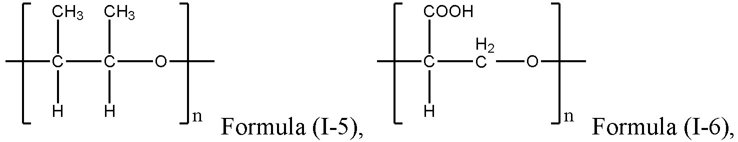

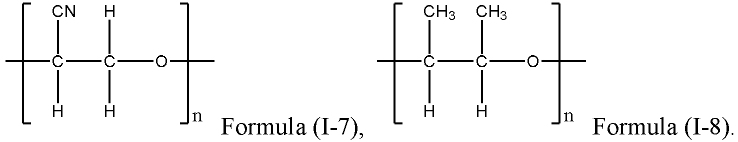

6. The separator according to any one of claims 1 to 5, wherein the ether polymer comprises a building block represented by Formula (II), 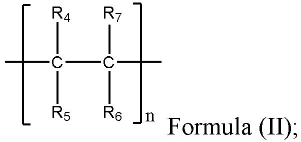 in Formula (II),
R₄ to R₇ each independently include a hydrogen atom, a substituted or unsubstituted C1-C3 alkyl group, a substituted or unsubstituted C1-C3 alkoxy group or ether group, and at least one of R₄ to R₇ includes a substituted or unsubstituted C1-C3 alkoxy group or ether group;
and optionally, R₄ to R₇ each independently include a hydrogen atom, a substituted or unsubstituted C1-C2 alkyl group, a substituted or unsubstituted C1-C2 alkoxy group or ether group, and at least one of R₄ to R₇ includes a substituted or unsubstituted C1-C2 alkoxy group or ether group.

7. The separator according to claim 6, wherein the ether polymer comprises at least one of a building block represented by Formula (II-1) to a building block represented by Formula (II-7),

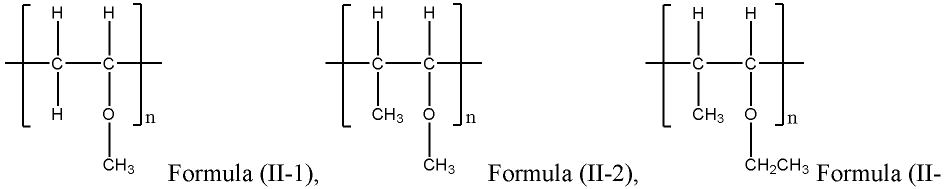

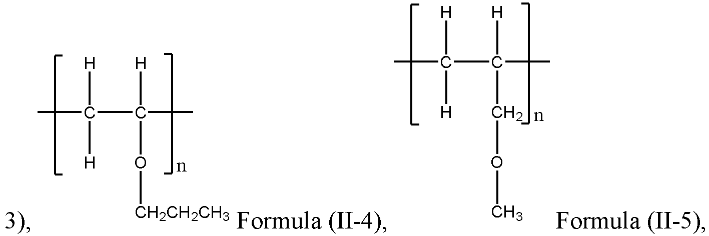

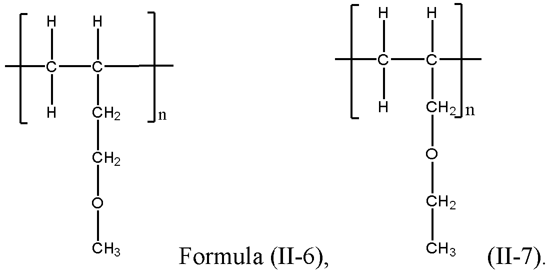

8. The separator according to any one of claims 4 to 7, wherein
n is selected from positive integers of 1500 to 25000; and/or
the ether polymer has a molecular weight ranging from 1.2x10⁵g/mol to 1.0x10⁶g/mol.

9. The separator according to any one of claims 1 to 8, wherein
the ether polymer is added to a first solvent at 70°C to form an ether polymer system;
the ether polymer system is subjected to standing at 70°C for 8h, and after standing at 25°C for the time of ≥24h, the ether polymer system is filtered via a 200-mesh filter screen, with a first substance remained,
wherein the ether polymer has a mass of q in the unit of g; the first substance has a mass of m in the unit of g; and the ether polymer and the first substance satisfy: 5≤m/q≤1000.

10. The separator according to any one of claims 1 to 9, wherein the separator body comprises a substrate, and the polymer layer is arranged on at least one surface of the substrate.

11. The separator according to any one of claims 1 to 9, wherein the separator body comprises a substrate and a heat-resistant coating, the heat-resistant coating is arranged on at least one surface of the substrate, and the polymer layer is arranged on a surface of the heat-resistant coating facing away from the substrate.

12. The separator according to any one of claims 1 to 11, wherein the polymer layer further comprises heat-resistant particles;
optionally, based on the total mass of the polymer layer, a ratio of the percentage mass content of the ether polymer to the percentage mass content of the heat-resistant particles is (0.2 to 5): 1; optionally (0.5 to 2): 1.

13. The separator according to any one of claims 1 to 12, wherein
a coating weight of the polymer layer ranges from 0.5 mg/1540.25 mm² to 5 mg/1540.25 mm².

14. A battery cell, comprising the separator according to any one of claims 1 to 13.

15. A battery, comprising the battery cell according to any one of claims 1 to 14.

16. An electrical apparatus, comprising the battery according to claim 15.
